Europäisches Patentamt

European Patent Office

Office européen des brevets

(19)

(11) Publication number: **0 203 706**
A2

# EUROPEAN PATENT APPLICATION

(21) Application number: 86303040.9

(22) Date of filing: 22.04.86

(51) Int. Cl.⁴: **A 23 C 9/156,** A 23 C 9/142, A 23 C 9/148

(30) Priority: 23.04.85 FI 851609

(43) Date of publication of application: 03.12.86
Bulletin 86/49

(84) Designated Contracting States: **AT BE CH DE FR GB IT LI LU NL SE**

(71) Applicant: **VALIO MEIJERIEN KESKUSOSUUSLIIKE, Kalevankatu 56, SF-00180 Helsinki (FI)**

(72) Inventor: **Nuurtamo, Marja, Keltamotie 1, SF-01300 Vantaa (FI)**
Inventor: **Backstrom, Karin, Kylanevantie 12 B 15, SF-00320 Helsinki (FI)**
Inventor: **Tossavainen, Olli, Kalevankatu 56 B, SF-00180 Helsinki (FI)**

(74) Representative: **Collier, Jeremy Austin Grey et al, J.A.Kemp & Co. 14, South Square Gray's Inn, London WC1R 5EU (GB)**

(54) A milk preparation suitable for diabetics and lactose-intolerant persons, and a process for preparing it.

㉗ A milk preparation suitable for persons suffering from diabetes or lactose intolerance contains fructose or aspartame in place of the lactose of the milk. Such milk preparations may be prepared by separating lactose from the milk by ultrafiltration or by a chromatographic treatment, and then adding fructose or aspartame. Vitamins and minerals are also added to ultrafiltered milk.

EP 0 203 706 A2

ACTORUM AG

A MILK PREPARATION SUITABLE FOR DIABETICS AND
LACTOSE-INTOLERANT PERSONS, AND A PROCESS FOR PREPARING IT

The invention relates to milk preparations suitable for persons suffering from diabetes or lactose intolerance, and to their preparation.

Owing to its high lactose content (ca 5.0 %), ordinary milk is not suitable for persons suffering from diabetes. Because of its rapid absorption, lactose is to diabetics almost as harmful as saccharose (sucrose). For this reason, diabetics often have to abstain completely from milk. It is known that, for persons suffering from lactose intolerance or galactosemia, low-lactose milk has been prepared by ultrafiltering milk to a low lactose content and by adding minerals in the form of salts and carbohydrates, in the form of saccharose (Domagk, G.F.: Milchwissenschaft 36 (10) p. 603-604 (1981)) or of maltodextrin (Sorensen, K.L., Meersohn, M.V., Sonne, J., Larsen, L., and Gudmand-Høyer, E., in Milk Intolerances and Rejection (ed. J. Delmont), Karger, Basle 1983, pp. 63-65.) However, because of the rapid absorption of the glucose of the carbohydrates, a product thus prepared is not suitable for diabetics.

The present invention provides a milk preparation which is suitable for diabetics and lactose-intolerant persons and which, in addition, has a good taste and feels pleasant in the mouth.

The composition of the milk preparation of the invention substantially corresponds to that of ordinary milk except that it contains little or no lactose and that it contains fructose and/or N-L-aspartyl-L-phenylalanine methyl ester (aspartame) as a sweetener. Preferably the milk preparation contains 0.5-1.5 g of fructose per 100 g of milk preparation, or 5-15 mg of aspartame per 100 g of milk preparation. As used herein the term "ordinary milk" means primarily non-fat, low-fat or whole milk.

According to a feature of the present invention the milk preparation described above is prepared by ultrafiltering ordinary milk so that the lactose concentration drops to less than 10 % of the dry-matter content, and then replacing the lactose removed either by fructose which is absorbed slowly, and/or by aspartame. Alternatively, the lactose may be separated chromatographically from the milk in accordance with Finnish Patent Application 854485, and then replaced by fructose and/or by aspartame. In the case of ultrafiltered milk the separated minerals and vitamins are returned to the product in the form of separate compounds or as a salt-vitamin mixture, and water is added to the product so that its protein content corresponds to that of ordinary milk, while the lactose content of the final product is less than 20 % of the original lactose content. On the other hand, chromatographically separated milk contains the original minerals and vitamins, and so they need not be added.

Preparations intended for diabetics often have a taste clearly different from that of the original product. For example, the hydrolysed milk intended for lactose-intolerant persons is often regarded as being too sweet. The preparation according to the invention has the advantage that, not only in its nutritional quality, but also in taste, it substantially corresponds to milk.

The invention is described below in greater detail in the Examples.

### Example 1

Non-fat milk is ultrafiltered so that its dry-matter content increases to 27 % (Brix) and its protein content to 17.5 %. Fructose (0.043 parts by weight) and water (4.26 parts by weight) are added to the concentrate (1 part by weight) obtained. In addition, 100 g NaCl, 5 g $Na_3$ citrate, 200 g $K_3$ citrate, 120 g $K_2HPO_4 \cdot 3H_2O$, 40 g $MgCl_2 \cdot 6H_2O$, 22 g $CaCl_2 \cdot 2 H_2O$, 0.004 g $MnSO_4 \cdot H_2O$, and 0.012 g thiamine are added per 100 litres of the mixture. The mixture is pasteurized and

- 3 -

packed into plastic bottles.  The milk thus obtained has a taste resembling that of non-fat milk.  It contains protein (3.2 g/100 g,  but only 1.7 g/100g of carbohydrates.  With respect to minerals the composition of the preparation obtained is also similar to that of non-fat milk (Table 1).

Table 1

|  | Low-lactose milk according to the invention | Ordinary non-fat milk |
|---|---|---|
| energy (kcal/100 g) | 20 | 33 |
| protein (%) | 3.2 | 3.2 |
| fat (%) | 0.05 | 0.05 |
| carbohydrates (%) | 1.7 | 5.0 |
| of which -lactose | 0.9 | 5.0 |
| -fructose | 0.8 | - |
| ash (%) | 0.77 | 0.76 |
| Na mg/100 g | 60 | 60 |
| K mg/100 g | 170 | 170 |
| Ca mg/100 g | 120 | 120 |
| P mg/100 g | 80 | 80 |
| Mg mg/100 g | 10 | 10 |
| Cu mg/100 g | 0.01 | 0.01 |
| Mn mg/100 g | 0.01 | 0.01 |
| Fe mg/100 g | 0.04 | 0.04 |
| Zn mg/100 g | 0.4 | 0.4 |
| Cl mg/100 g | 110 | 100 |
| thiamine mg/100 g | 0.03 | 0.03 |
| riboflavin mg/100 g | 0.20 | 0.20 |

Example 2

A column having a height of 100 cm and a diameter of 1.6 cm was filled with a strong cation exchange resin produced by Suomen Sokeri Oy. The average particle size of the resin was 0.4 mm. The resin volume of the packed column was 160 ml. The column had a heating mantle by means of which the temperature was maintained at 65°C. Two litres of non-fat milk was first pumped through the column in order to reach an ionic equilibrium. After a rinse with water, 5 ml non-fat milk concentrate (dry-matter content approx. 30%) was fed into the column. Demineralized water was used for the elution. The flow rate was 150 ml/h. Table 2 shows the composition of the lactose-free fraction of the treated milk, compared with the composition of non-fat milk.

Table 2

|  | Chromatographically separated milk | Non-fat ordinary milk |
|---|---|---|
| protein (%) | 3.2 | 3.2 |
| fat (%) | 0.05 | 0.05 |
| carbohydrate (%) |  |  |
| -lactose (%) | 0.2 | 5.0 |
| ash (%) | 0.80 | 0.76 |
| Na mg/100 g | 90 | 60 |
| K mg/100 g | 150 | 170 |
| Ca mg/100 g | 120 | 120 |
| P mg/100 g | 90 | 80 |
| Mg mg/100 g | 10 | 10 |
| Cu mg/100 g | 0.01 | 0.01 |
| Mn mg/100 g | 0.01 | 0.01 |
| Fe mg/100 g | 0.04 | 0.04 |
| Zn mg/100 g | 0.4 | 0.4 |
| Cl mg/100 g | 150 | 100 |

To the raw material thus obtained, fructose is added so as to achieve a sweetness corresponding to the original sweetness of milk. The addition rate is 0.5-1.5 g/100 g.

Example 3

A non-fat milk preparation suitable for use by diabetics was prepared by ultrafiltration as in Example 1, but N-L-aspartyl-L-phenylalanine methyl ester (aspartame) 8.5 mg/ 100 g was added instead of fructose, to attain the original sweetness of the milk.

-6-

CLAIMS

1. A milk preparation having a composition substantially corresponding to that of ordinary milk, except that it contains little or no lactose and that it contains fructose and/or aspartame as a sweetener.

2. A milk preparation according to Claim 1, containing 0.5-1.5 g of fructose per 100 g of milk preparation.

3. A milk preparation according to Claim 1, containing 5-15mg of aspartame per 100 g of milk preparation.

4. A process for preparing a milk preparation according to Claim 1, 2 or 3 which comprises ultrafiltering milk so that its lactose content is reduced to below 10% of the dry-matter content, adding water, minerals and vitamins to the concentrate so that the protein, minerals and vitamin contents correspond to those of ordinary milk, and adding fructose and/or aspartame to the product so that the sweetness corresponds to the sweetness of ordinary milk.

5. A process for preparing a milk preparation according to Claim 1, 2 or 3 which comprises treating milk chromatographically to remove the lactose, and then adding fructose and/or aspartame to the obtained low-lactose or non-lactose product so that its sweetness corresponds to the sweetness of ordinary milk.

6. A process according to Claim 4 or 5 in which fructose is added at 0.5-1.5 g per 100 g milk preparation.

7. A process according to Claim 4 or 5 in which aspartame is added at 5-15 mg/100 g milk preparation.